# EUROPEAN PATENT SPECIFICATION

(11) **EP 4 192 096 B1**
(45) Date of publication and mention of the grant of the patent: **25.06.2025**
(21) Application number: 21852429.6
(22) Date of filing: 09.08.2021
(51) Int. Cl.: H04W 28/20, H04L 5/00, H04L 27/26, H04W 72/0453

(54) **BANDWIDTH MODE INDICATION METHOD AND APPARATUS**
VERFAHREN UND VORRICHTUNG ZUR ANZEIGE EINES BANDBREITENMODUS
PROCÉDÉ ET APPAREIL D'INDICATION DE MODE DE BANDE PASSANTE

(30) Priority: 07.08.2020 CN 202010791002
(43) Date of publication of application: 07.06.2023
(73) Proprietor: Huawei Technologies Co., Ltd., Shenzhen, Guangdong 518129 (CN)
(72) Inventor: LI, Yunbo, Shenzhen, Guangdong 518129 (CN); YU, Jian, Shenzhen, Guangdong 518129 (CN); LIU, Chenchen, Shenzhen, Guangdong 518129 (CN); GAN, Ming, Shenzhen, Guangdong 518129 (CN); LIANG, Dandan, Shenzhen, Guangdong 518129 (CN); GUO, Yuchen, Shenzhen, Guangdong 518129 (CN)
(74) Representative: Gill Jennings & Every LLP
(86) International application number: PCT/CN2021/111491
(87) International publication number: WO 2022/028618

(56) References cited:
- CN-A- 103 201 985
- CN-A- 110 621 043
- US-A1- 2016 119 453
- US-A1- 2020 162 963
- YONGHO SEOK (MEDIATEK): "EHT RTS and CTS procedure", vol. 802.11 EHT; 802.11be, no. 2, 19 March 2020 (2020-03-19), pages 1 - 17, XP068167167, Retrieved from the Internet <URL:https://mentor.ieee.org/802.11/dcn/19/11-19-2125-02-00be-eht-rts-and-cts-procedure.pptx> [retrieved on 20200319]
- YOUHAN KIM (ATHEROS): "Various Bit Order ; 11-11-0564-00-00ac-various-bit-order", IEEE DRAFT; 11-11-0564-00-00AC-VARIOUS-BIT-ORDER, IEEE-SA MENTOR, PISCATAWAY, NJ USA, vol. 802.11ac, 21 April 2011 (2011-04-21), pages 1 - 7, XP017674788
- HUAWEI, HISILICON: "DL channels and signals in NR unlicensed band", 3GPP DRAFT; R1-1911864, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823046

## Description

### TECHNICAL FIELD

This application relates to the field of communication technologies, and in particular, to a bandwidth mode indication method and apparatus.

### BACKGROUND

In a wireless communication scenario, a transmit end and a receive end are located in different radio channel environments. Therefore, it is very conducive for data communication if a bandwidth available to both the transmit end and the receive end can be negotiated based on channel availability of the transmit end and the receive end before data communication. To achieve this objective, in the 802.11ac standard, two bits (namely, a B5 bit and a B6 bit) in the first seven bits of a scrambling sequence (scrambling sequence) used by a non-high throughput (non-high throughput, non-HT) frame or a non-HT duplicated (duplicated) frame are used to indicate bandwidth modes. Four values of the two bits one-to-one correspond to four bandwidth modes. The four bandwidth modes are 20 MHz, 40 MHz, 80 MHz, and 160 MHz (or 80+80 MHz).

Currently, the Institute of Electrical and Electronics Engineers (institute of electrical and electronics engineers, IEEE) is discussing the next-generation 802.11be standard after the 802.11ax. Compared with the previous 802.11ax standard, the 802.11be standard supports data transmission with an extremely high throughput (extremely high throughput, EHT). The 802.11be standard supports a maximum transmission bandwidth of 320 MHz. Therefore, the 802.11be standard introduces bandwidth modes other than 20 MHz, 40 MHz, 80 MHz, and 80+80 MHz or 160 MHz, such as 320 MHz.

After the bandwidth modes other than 20 MHz, 40 MHz, 80 MHz, and 80+80 MHz or 160 MHz are introduced, how two devices negotiate a bandwidth mode is a technical problem to be urgently resolved.

US20200162963A1 discloses methods, computer readable media, and apparatus for encoding and determining a bandwidth. FIG. 19 illustrates a service field bit assignment, including scrambler initialization, reserved service bits, R: reserved, and transmit order. The bits 0 through 6 may be used to encode the bandwidth information and an indication if static or dynamic bandwidth operation is supported.

"EHT RTS and CTS procedure", IEEE 802.11-19/2125r2, discusses EHT PHY Support in MAC. 802.11be needs to define the MU-RTS/ RTS and CTS frames sent in a non-HT duplicate PPDU with preamble puncturing.

"Various Bit Order", IEEE 802.11-11/0564r0, discusses VHT-SIG-B in SERVICE Field.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

This application provides a bandwidth mode indication method and apparatus, so that in a scenario in which other bandwidth modes other than 20 MHz, 40 MHz, 80 MHz, and 160 MHz (or 80+80 MHz) are introduced, two devices can normally negotiate a bandwidth mode.

According to a first aspect, a bandwidth mode indication method is provided. The method includes: A transmit end generates a first frame, where the first frame is a non-HT frame or a non-HT duplicated frame, the first frame includes a service field, the service field includes a first field, the first field indicates whether a bandwidth mode indication field carried in the first frame indicates a target bandwidth mode, and the target bandwidth mode includes one or more of bandwidth modes other than 20 MHz, 40 MHz, 80 MHz, and 80+80 MHz or 160 MHz; and then the transmit end sends the first frame to a receive end.

Based on the foregoing technical solution, the first frame uses only at least one bit in the service field as the first field, and does not increase or decrease a bit in the service field. In this way, backward compatibility of the first frame is ensured. In addition, the first field indicates whether the bandwidth mode indication field carried in the first frame is allowed to indicate the target bandwidth mode. In other words, because the service field of the first frame includes the first field, the bandwidth mode indication field carried in the first frame extends a range of bandwidth modes that can be indicated. Therefore, in a scenario in which other bandwidth modes other than 20 MHz, 40 MHz, 80 MHz, and 80+80 MHz or 160 MHz are introduced, two devices can negotiate, by transmitting the first frame, to use one bandwidth mode from more bandwidth modes.

In addition, that the first field is located in the service field of the first frame has the following advantages: (1) Currently, a reserved bit in a media access control (media access control, MAC) frame may be used by a chip vendor as a private indication bit. Therefore, if the reserved bit in the MAC frame is used as the first field, indication of the private bit is affected. However, using the bit in the service field as the first field can avoid affecting private use of the reserved bit in the MAC frame by the chip vendor. (2) Reserved bits in MAC frames of different types of conventional frames do not necessarily have the same location. Therefore, for the different types of transmission frames, implementation solutions of using the reserved bits in the MAC frames as the first field are different. The service field is a field introduced to perform a scrambling operation at a physical layer. The service field is located before the MAC frame, and the service field itself is a field at the physical layer, in other words, all types of conventional frames include the service field. In this way, using the bit in the service field as the first field is applicable to all types of conventional frames.

The first frame further includes a unicast/multicast bit. When the first field is set to a first preset value and the unicast/multicast bit is set to 0, it indicates that the first frame does not carry the bandwidth mode indication field. Alternatively, when the first field is set to the first preset value and the unicast/multicast bit is set to 1, it indicates that the first frame carries the bandwidth mode indication field and the bandwidth mode indication field indicates a bandwidth mode in a first bandwidth mode set, where the first bandwidth mode set includes 20 MHz, 40 MHz, 80 MHz, and 80+80 MHz or 160 MHz. Alternatively, when the first field is set to a second preset value and the unicast/multicast bit is set to 0, it indicates that the first frame carries the bandwidth mode indication field and the bandwidth mode indication field indicates a bandwidth mode in a second bandwidth mode set, where the second bandwidth mode set includes the target bandwidth mode.

In a possible manner, when the first frame carries the bandwidth mode indication field and the first field is set to the first preset value, the bandwidth mode indication field occupies a B5 bit and a B6 bit in the first seven bits of a scrambling sequence.

In a possible manner, when the first frame carries the bandwidth mode indication field and the first field is set to the second preset value, the bandwidth mode indication field is one of the following cases: The bandwidth mode indication field occupies the B5 bit and the B6 bit in the first seven bits of the scrambling sequence; or the bandwidth mode indication field occupies at least three bits in the first seven bits of the scrambling sequence; or the bandwidth mode indication field occupies at least one bit in the last nine bits of the service field; or the bandwidth mode indication field occupies at least one bit in the first seven bits of the scrambling sequence and at least one bit in the last nine bits of the service field.

In a possible manner, when a value of the first field is the second preset value, the bandwidth mode indication field includes a fourth field and a fifth field. When the fourth field indicates that a total bandwidth is less than or equal to 160 MHz, each of eight bits occupied by the fifth field corresponds to one 20 MHz channel, and one bit indicates whether the 20 MHz channel corresponding to the bit is idle. When the fourth field indicates that the total bandwidth is greater than 160 MHz or equal to 320 MHz or 160+160 MHz, the fifth field includes four first bits, two second bits, and two third bits. Each of the four first bits corresponds to one 20 MHz channel of a primary 80 MHz channel, each of the two second bits corresponds to one 40 MHz channel of a secondary 80 MHz channel, and each of the two third bits corresponds to one 80 MHz of a secondary 160 MHz. The first bit indicates whether the 20 MHz channel corresponding to the first bit is idle, the second bit indicates whether the 40 MHz channel corresponding to the second bit is idle, and the third bit indicates whether the 80 MHz channel corresponding to the third bit is idle.

The first field occupies bit 7 of the service field.

In a possible manner, the target bandwidth mode includes a preamble puncturing bandwidth mode and/or a non-preamble puncturing bandwidth mode.

According to a second aspect, a bandwidth mode indication method is provided. The method includes: A receive end receives a first frame, where the first frame is a non-HT frame or a non-HT duplicated frame, the first frame includes a service field, the service field includes a first field, the first field indicates whether a bandwidth mode indication field carried in the first frame indicates a target bandwidth mode, and the target bandwidth mode includes one or more of bandwidth modes other than 20 MHz, 40 MHz, 80 MHz, and 80+80 MHz or 160 MHz; and then the receive end parses the first frame.

Based on the foregoing technical solution, the first frame uses only at least one bit in the service field as the first field, and does not increase or decrease a bit in the service field. In this way, backward compatibility of the first frame is ensured. The first field indicates whether the bandwidth mode indication field carried in the first frame is allowed to indicate the target bandwidth mode. In other words, because the service field of the first frame includes the first field, the bandwidth mode indication field carried in the first frame extends a range of bandwidth modes that can be indicated. Therefore, in a scenario in which other bandwidth modes other than 20 MHz, 40 MHz, 80 MHz, and 80+80 MHz or 160 MHz are introduced, two devices can negotiate, by transmitting the first frame, to use one bandwidth mode from more bandwidth modes.

The first frame further includes a unicast/multicast bit. When the first field is set to a first preset value and the unicast/multicast bit is set to 0, it indicates that the first frame does not carry the bandwidth mode indication field. Alternatively, when the first field is set to the first preset value and the unicast/multicast bit is set to 1, it indicates that the first frame carries the bandwidth mode indication field and the bandwidth mode indication field indicates a bandwidth mode in a first bandwidth mode set, where the first bandwidth mode set includes 20 MHz, 40 MHz, 80 MHz, and 80+80 MHz or 160 MHz. Alternatively, when the first field is set to a second preset value and the unicast/multicast bit is set to 0, it indicates that the first frame carries the bandwidth mode indication field and the bandwidth mode indication field indicates a bandwidth mode in a second bandwidth mode set, where the second bandwidth mode set includes the target bandwidth mode.

In a possible manner, when the first frame carries the bandwidth mode indication field and the first field is set to the first preset value, the bandwidth mode indication field occupies a B5 bit and a B6 bit in the first seven bits of a scrambling sequence.

In a possible manner, when the first frame carries the bandwidth mode indication field and the first field is set to the second preset value, the bandwidth mode indication field is one of the following cases: The bandwidth mode indication field occupies the B5 bit and the B6 bit in the first seven bits of the scrambling sequence; or the bandwidth mode indication field occupies at least three bits in the first seven bits of the scrambling sequence; or the bandwidth mode indication field occupies at least one bit in the last nine bits of the service field; or the bandwidth mode indication field occupies at least one bit in the first seven bits of the scrambling sequence and at least one bit in the last nine bits of the service field.

In a possible manner, when a value of the first field is the second preset value, the bandwidth mode indication field includes a fourth field and a fifth field. When the fourth field indicates that a total bandwidth is less than or equal to 160 MHz, each of eight bits occupied by the fifth field corresponds to one 20 MHz channel, and one bit indicates whether the 20 MHz channel corresponding to the bit is idle. When the fourth field indicates that the total bandwidth is greater than 160 MHz or equal to 320 MHz or 160+160 MHz, the fifth field includes four first bits, two second bits, and two third bits. Each of the four first bits corresponds to one 20 MHz channel of a primary 80 MHz channel, each of the two second bits corresponds to one 40 MHz channel of a secondary 80 MHz channel, and each of the two third bits corresponds to one 80 MHz of a secondary 160 MHz. The first bit indicates whether the 20 MHz channel corresponding to the first bit is idle, the second bit indicates whether the 40 MHz channel corresponding to the second bit is idle, and the third bit indicates whether the 80 MHz channel corresponding to the third bit is idle.

The first field occupies bit 7 of the service field.

In a possible manner, the target bandwidth mode includes a preamble puncturing bandwidth mode and/or a non-preamble puncturing bandwidth mode.

According to a third aspect, a bandwidth mode indication method is provided, according to independent claim 1.

Based on the foregoing technical solution, the second frame uses only at least one bit in the service field as the second field, and does not increase or decrease a bit in the service field. In this way, backward compatibility of the second frame is ensured. In addition, the second field indicates whether the bandwidth mode of the second frame is the target bandwidth mode. Therefore, in a scenario in which other bandwidth modes other than 20 MHz, 40 MHz, 80 MHz, and 80+80 MHz or 160 MHz are introduced, two devices can negotiate, by transmitting the second frame, to use one bandwidth mode from more bandwidth modes.

In addition, that the second field is located in the service field of the second frame has the following advantages: (1) Currently, a reserved bit in a MAC frame may be used by a chip vendor as a private indication bit. Therefore, if the reserved bit in the MAC frame is used as the second field, indication of the private bit is affected. However, using the bit in the service field as the second field can avoid affecting private use of the reserved bit in the MAC frame by the chip vendor. (2) Reserved bits in MAC frames of different types of conventional frames do not necessarily have the same location. Therefore, for the different types of transmission frames, implementation solutions of using the reserved bits in the MAC frames as the second field are different. The service field is a field introduced to perform a scrambling operation at a physical layer. The service field is located before the MAC frame, and the service field itself is a field at the physical layer, in other words, all types of conventional frames include the service field. In this way, using the bit in the service field as the second field is applicable to all types of conventional frames.

According to a fourth aspect, a bandwidth mode indication method is provided, according to independent claim 2.

According to a ninth aspect, a communication apparatus is provided, according to independent claim 8.

According to a tenth aspect, a communication apparatus is provided, according to independent claim 7.

According to an eighteenth aspect, a computer-readable storage medium is provided, according to either of claims 9 or 10.

According to a nineteenth aspect, a computer program product including computer instructions is provided. When the computer instructions are run on a computer, the computer is enabled to perform any method provided in any one of the first aspect to the eighth aspect.

According to a twentieth aspect, a chip is provided, including a processing circuit and a transceiver pin. The processing circuit and the transceiver pin are configured to implement any method provided in any one of the first aspect to the eighth aspect. The processing circuit is configured to perform a processing action in the corresponding method, and the transceiver pin is configured to perform a receiving/sending action in the corresponding method.

It should be noted that for technical effects brought by any design in the ninth aspect to the twentieth aspect, refer to technical effects brought by corresponding designs in the first aspect to the eighth aspect. Details are not described herein again.

### BRIEF DESCRIPTION OF DRAWINGS

FIG. 1 is a schematic diagram of channel distribution of a 320 MHz bandwidth;
FIG. 2 is a schematic diagram of a structure of a service field according to an embodiment of this application;
FIG. 3 is a flowchart of a bandwidth mode indication method according to an embodiment of this application;
FIG. 4 is a flowchart of another bandwidth mode indication method according to an embodiment of this application;
FIG. 5 is a flowchart of still another bandwidth mode indication method according to an embodiment of this application;
FIG. 6 is a schematic diagram of a structure of a CTS frame according to an embodiment of this application;
FIG. 7 is a schematic diagram of a structure of a fourth frame according to an embodiment of this application;
FIG. 8 is a flowchart of yet another bandwidth mode indication method according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference either.

In this application, the word "example", "for example", or the like is used to represent giving an example, an illustration, or a description. Any embodiment or design scheme described as an "example" or with "for example" in this application should not be explained as being more preferred or having more advantages than another embodiment or design scheme. Exactly, use of the word "example", "for example" or the like is intended to present a relative concept in a specific manner.

The WLAN starts from the 802.11a/g, goes through the 802.11n and the 802.11ac, and goes through the 802.11ax and the 802.11be that are currently discussed. For allowed transmission bandwidths of the WLAN, refer to Table 1. The 802.11n standard is also referred to as a high throughput (high throughput, HT), the 802.11ac standard is referred to as a very high throughput (very high throughput, VHT), the 802.11ax (Wi-Fi 6) is referred to as an HE, the 802.11be (Wi-Fi 7) is referred to as an extremely high throughput (extremely high throughput, EHT), and standards before the HT, such as the 802.11a/b/g, are collectively referred to as a non-high throughput (Non-HT). The 802.11b uses a non-orthogonal frequency division multiplexing (orthogonal frequency division multiplexing, OFDM) mode, and therefore is not listed in Table 1.

**Table 1**

| | 802.11a /g | 802.11n (HT) | 802.11ac (VHT) | 802.11ax (HE) | 802.11be (EHT) |
|---|---|---|---|---|---|
| Bandwi dth | 20 MHz | 20/40 MHz | 20/40/80/160 MHz | 20/40/80/160 MHz | 20/40/80/160/24 0/320 MHz |

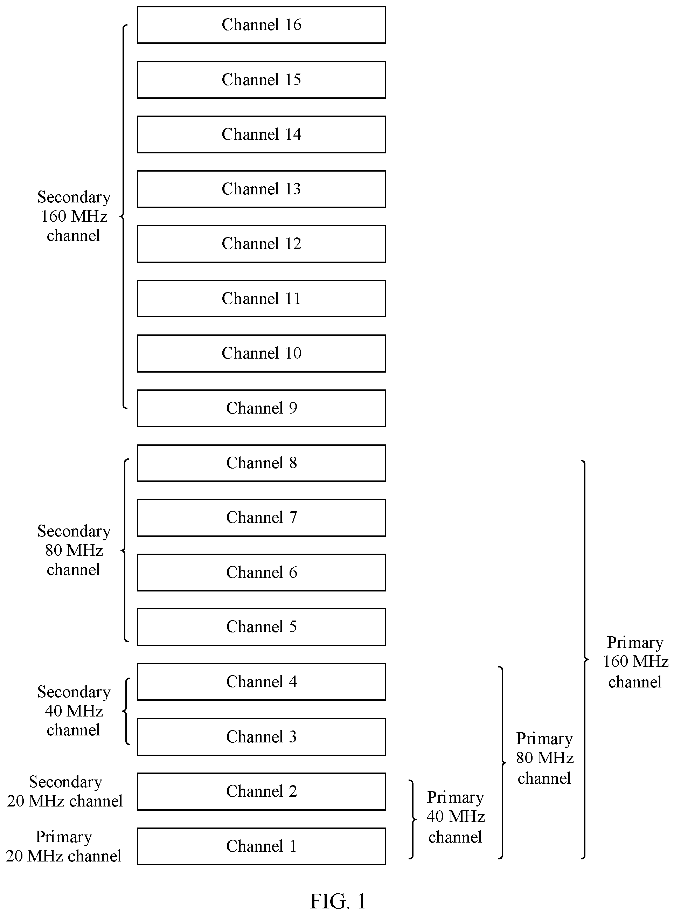

For example, channel distribution of a 320 MHz bandwidth may be shown in FIG. 1. A 320 MHz channel may be divided into sixteen 20 MHz channels. The sixteen 20 MHz channels may be sequentially numbered from a high frequency to a low frequency, or may be sequentially numbered from a low frequency to a high frequency.

For example, in FIG. 1, a channel 1 may be used as a primary 20 MHz channel, and a channel 2 may be used as a secondary 20 MHz channel. The channel 1 and the channel 2 may be aggregated as a primary 40 MHz channel. A channel 3 and a channel 4 may be aggregated as a secondary 40 MHz channel. The channel 1 to the channel 4 may be aggregated as a primary 80 MHz channel. A channel 5 to a channel 8 may be aggregated as a secondary 80 MHz channel. The channel 1 to the channel 8 may be aggregated as a primary 160 MHz channel. A channel 9 to a channel 16 may be aggregated as a secondary 160 MHz channel.

It should be noted that the primary 20 MHz channel is not necessarily a 20 MHz channel located at the beginning. For example, the channel 3 may be used as the primary 20 MHz channel, the channel 4 may be used as the secondary 20 MHz channel, the channel 3 and the channel 4 may be aggregated as the primary 40 MHz channel, the channel 1 and the channel 2 may be aggregated as the secondary 40 MHz channel, the channel 1 to the channel 4 may be aggregated as the primary 80 MHz channel, the channel 5 to the channel 8 may be aggregated as the secondary 80 MHz channel, the channel 1 to the channel 8 may be aggregated as the primary 160 MHz channel, and the channel 9 to the channel 16 may be aggregated as the secondary 160 MHz channel. The secondary channel may alternatively have another name, for example, a slave channel or an auxiliary channel. This embodiment of this application is not limited thereto.

In a standard after the 802.11a, to ensure backward compatibility, some control frames are sent in a non-HT duplicated manner on a channel with a bandwidth greater than 20 MHz. In other words, the control frame uses a non-HT format (in other words, the control frame uses a format that complies with the 802.11a standard), and the control frame is copied to 20 MHz channels in the channels for sending. For ease of description, a frame sent in the non-HT duplicated manner is referred to as a non-HT duplicated frame or a frame in a non-HT duplicated format below.

In a wireless communication scenario, a transmit end and a receive end are located in different radio channel environments. Therefore, it is very conducive for data communication if a bandwidth available to both the transmit end and the receive end can be negotiated based on channel availability of the transmit end and the receive end before data communication.

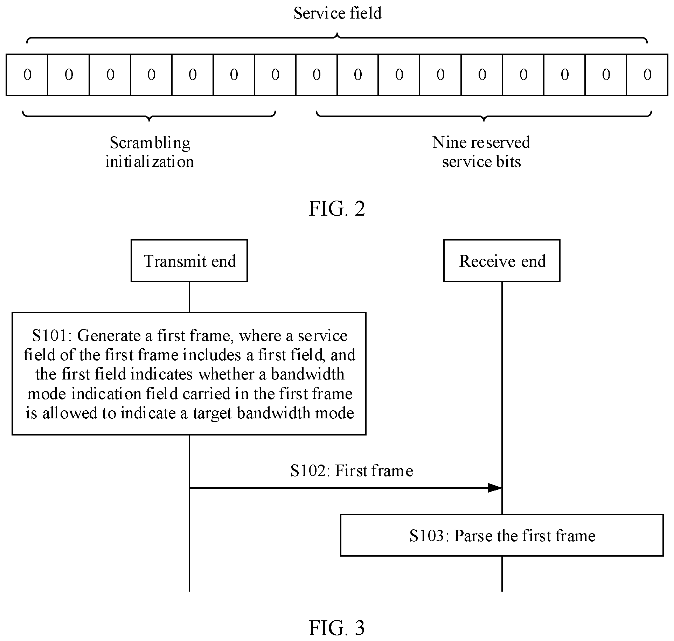

In the 802.11n standard, the non-HT duplicated frame or a non-HT frame includes a service field. For a structure of the service field, refer to FIG. 2. The service field may be divided into two parts. The first seven bits of the service field are used to carry the first seven bits of a scrambling sequence, and the last nine bits of the service field are reserved service bits.

To implement an objective of negotiating a bandwidth mode, in the 802.11ac standard, a B5 bit and a B6 bit in the first seven bits of the scrambling sequence used by the non-HT duplicated frame or the non-HT frame are set as a CH_BANDWIDTH_IN_NON_HT field, where the CH_BANDWIDTH_IN_NON_HT field indicates a bandwidth mode.

The first seven bits of the scrambling sequence are sequentially numbered a B0 bit to the B6 bit from a low bit to a high bit. Therefore, the B5 bit is the sixth bit in the first seven bits of the scrambling sequence, and the B6 bit is the seventh bit in the first seven bits of the scrambling sequence.

For example, in the 802.11ac standard, correspondences between values of the CH_BANDWIDTH_IN_NON_HT field and bandwidth modes may be shown in Table 2. A unit of a channel bandwidth (channel bandwidth, CBW) in Table 2 is MHz.

**Table 2**

| Enumerated values of the bandwidth mode | Value |
|---|---|
| CBW 20 | 0 |
| CBW 40 | 1 |
| CBW 80 | 2 |
| CBW 160 or CBW 80+80 | 3 |

The bandwidth mode may also be referred to as the channel bandwidth. A bandwidth mode indicated by a CH_BANDWIDTH_IN_NON_HT field in a current frame is a channel bandwidth used for transmitting the frame.

Optionally, to enable the receive end to know whether the transmit end adds the CH_BANDWIDTH_IN_NON_HT field to the scrambling sequence, the transmit end uses a unicast (unicast)/multicast (multicast) bit in a transmitter address (transmitter address, TA) field in the non-HT duplicated frame or the non-HT frame to indicate whether the B5 bit and the B6 bit in the first seven bits of the scrambling sequence are used as the CH_BANDWIDTH_IN_NON_HT field. Specifically, if the unicast/multicast bit is set to 1, it indicates that the B5 bit and the B6 bit in the first seven bits of the scrambling sequence are used as the CH_BANDWIDTH_IN_NON_HT field. If the unicast/multicast bit is set to 0, it indicates that the B5 bit and the B6 bit in the first seven bits of the scrambling sequence are not used as the CH_BANDWIDTH_IN_NON_HT field.

With development of technologies, in the wireless communication scenario, bandwidth modes that may be used between the transmit end and the receive end may exceed the four bandwidth modes shown in Table 2. For example, because the 802.11be standard supports a maximum transmission bandwidth of 320 MHz, other bandwidth modes such as 320 MHz may be used between the transmit end and the receive end that use the 802.11be standard.

Currently, the CH_BANDWIDTH_IN_NON_HT field supports only the four bandwidth modes shown in Table 2. Therefore, in a scenario in which other bandwidth modes other than 20 MHz, 40 MHz, 80 MHz, and 80+80 MHz or 160 MHz are introduced, how the non-HT duplicated frame or the non-HT frame indicates a bandwidth mode is a technical problem that needs to be urgently resolved.

To resolve this technical problem, embodiments of this application provide a bandwidth mode indication method and apparatus. The technical solutions provided in this application may be applied to various communication systems, for example, a system using the IEEE 802.11 standard. For example, the IEEE 802.11 standard includes but is not limited to the 802.11be standard or the next-generation 802.11 standard. Scenarios to which the technical solutions of this application are applicable include communication between an access point (access point, AP) and a station (station, STA), communication between APs, communication between STAs, and the like.

The STAs in this application may be various user terminals, user apparatuses, access apparatuses, subscriber stations, subscriber units, mobile stations, user agents, user devices, or other devices that have a wireless communication function. The user terminals may include various handheld devices, vehicle-mounted devices, wearable devices, computing devices that have the wireless communication function or another processing device connected to a wireless modem; and include various forms of user equipment (user equipment, UE), mobile stations (mobile station, MS), terminals (terminal), terminal equipment (terminal equipment), portable communication devices, handheld devices, portable computing devices, entertainment devices, game devices or systems, global positioning system devices, or any other suitable device configured to perform network communication via wireless media. Herein, for ease of description, the devices mentioned above are collectively referred to as stations or STAs.

An access point AP in this application is an apparatus that is deployed in a wireless communication network and that provides a wireless communication function for a STA associated with the access point. The access point AP may be used as a hub of a communication system, and may be a communication device such as a base station, a router, a gateway, a repeater, a communication server, a switch, or a bridge. The base station may include a macro base station, a micro base station, a relay station, and the like in various forms. Herein, for ease of description, the devices mentioned above are collectively referred to as access points APs.

An embodiment of this application provides a first frame. The first frame is a non-HT duplicated frame or a non-HT frame, for example, an RTS frame or a CTS frame.

The first frame includes a service field. The service field carried in the first frame occupies 16 bits. In other words, compared with a non-HT duplicated frame or a non-HT frame defined in the 802.11n standard, no bit is added to or removed from the first frame provided in this application, so that the first frame has backward compatibility.

The service field of the first frame includes a first field, and the first field indicates whether a bandwidth mode indication field carried in the first frame is allowed to indicate a target bandwidth mode. The target bandwidth mode includes one or more of bandwidth modes other than 20 MHz, 40 MHz, 80 MHz, and 80+80 MHz or 160 MHz. For example, the target bandwidth mode may include 320 MHz (or 160+160 MHz), 240 MHz, or the like. This is not limited herein.

Optionally, the first field occupies at least one bit in B7 to B15 bits in the service field. For example, the first field occupies the B7 bit, a B11 bit, or the B15 bit in the service field.

In this embodiment of this application, when the first frame carries the bandwidth mode indication field, bits occupied by the bandwidth mode indication field are different from bits occupied by the first field.

Optionally, when the first field occupies one bit, that the first field indicates whether a bandwidth mode indication field carried in the first frame is allowed to indicate a target bandwidth mode includes: When the first field is set to a first preset value, the first field indicates that the bandwidth mode indication field carried in the first frame is not allowed to indicate the target bandwidth mode; or when the first field is set to a second preset value, the first field indicates that the bandwidth mode indication field carried in the first frame is allowed to indicate the target bandwidth mode.

For example, when the first field is implemented by using one bit, the first preset value may be 0, and the second preset value may be 1; or the first preset value may be 1, and the second preset value may be 0.

Optionally, when the first field occupies a plurality of bits, that the first field indicates whether a bandwidth mode indication field carried in the first frame is allowed to indicate a target bandwidth mode includes: When the first field is set to the first preset value, the first field indicates that the bandwidth mode indication field carried in the first frame is not allowed to indicate the target bandwidth mode; or when the first field is set to another value other than the first preset value, the first field indicates that the bandwidth mode indication field carried in the first frame is allowed to indicate the target bandwidth mode. There are one or more other values.

Optionally, when the first field occupies the plurality of bits, the first field may have another function. For example, the first field may further indicates a total bandwidth.

Optionally, the first frame may use any one of the following designs.

Design 1: The first field occupies at least one bit, and the first frame indicates the bandwidth mode in the following manner (1-1) or (1-2).

(1-1): When the first field is set to the first preset value, the first frame does not carry the bandwidth mode indication field, or the bandwidth mode indication field carried in the first frame indicates a bandwidth mode in a first bandwidth mode set.

When the first field is set to the first preset value, the bandwidth mode indication field carried in the first frame is implemented by using two bits (for example, the B5 bit and the B6 bit) in the first seven bits of the scrambling sequence. Bandwidth modes included in the first bandwidth mode set are 20 MHz, 40 MHz, 80 MHz, and 160 MHz (or 80+80 MHz). For correspondences between the values of the bandwidth mode indication field and the enumerated values of the bandwidth modes, refer to Table 2. This is uniformly described herein, and details are not described below again.

(1-2): When the first field is set to the second preset value, the bandwidth mode indication field carried in the first frame indicates a bandwidth mode in a second bandwidth mode set. The second bandwidth mode set includes the target bandwidth mode.

Optionally, when the bandwidth mode indication field occupies one or two bits, the second bandwidth mode set does not include the four bandwidth modes: 20 MHz, 40 MHz, 80 MHz, and 80+80 MHz or 160 MHz. In other words, an intersection set between the second bandwidth mode set and the first bandwidth mode set is empty.

Optionally, when the bandwidth mode indication field occupies at least three bits, the second bandwidth mode set may include the four bandwidth modes: 20 MHz, 40 MHz, 80 MHz, and 160 MHz (or 80+80 MHz). In other words, the first bandwidth mode set is a proper subset of the second bandwidth mode set. Based on this, the second bandwidth mode set includes at least five bandwidth modes.

Optionally, when the bandwidth mode indication field occupies the at least three bits, the second bandwidth mode set does not include the four bandwidth modes: 20 MHz, 40 MHz, 80 MHz, and 160 MHz (or 80+80 MHz). In other words, the intersection set between the second bandwidth mode set and the first bandwidth mode set is empty. Based on this, a quantity of bandwidth modes included in the second bandwidth mode set is not limited in this embodiment of this application. For example, the second bandwidth mode set may include 8 or 63 bandwidth modes.

Design 2: The first field occupies at least one bit, and the first frame further includes the unicast/multicast bit. The first frame indicates the bandwidth mode in the following manners (2-1), (2-2), or (2-3).

(2-1): When the unicast/multicast bit is set to 0, it indicates that the first frame does not carry the bandwidth mode indication field.

(2-2): When the first field is set to the first preset value and the unicast/multicast bit is set to 1, the bandwidth mode indication field carried in the first frame indicates the bandwidth mode in the first bandwidth mode set.

(2-3): When the first field is set to the second preset value and the unicast/multicast bit is set to 0 or 1, the bandwidth mode indication field carried in the first frame indicates the bandwidth mode in the second bandwidth mode set.

Design 3: The first field occupies at least one bit, and the first frame further includes the unicast/multicast bit. The first frame indicates the bandwidth mode in the following manners (3-1), (3-2), (3-3) or (3-4).

(3-1): When the first field is set to the first preset value and the unicast/multicast bit is set to 0, it indicates that the first frame does not carry the bandwidth mode indication field.

(3-2): When the first field is set to the first preset value and the unicast/multicast bit is set to 1, the bandwidth mode indication field carried in the first frame indicates the bandwidth mode in the first bandwidth mode set.

(3-3): When the first field is set to the second preset value and the unicast/multicast bit is set to 0, the bandwidth mode indication field carried in the first frame indicates a bandwidth mode in a third bandwidth mode set.

(3-4): When the first field is set to the second preset value and the unicast/multicast bit is set to 1, the bandwidth mode indication field carried in the first frame indicates a bandwidth mode in a fourth bandwidth mode set.

In this embodiment of this application, at least one of the third bandwidth mode set and the fourth bandwidth mode set includes the target bandwidth mode. In addition, the bandwidth mode included in the third bandwidth mode set is different from the bandwidth mode included in the fourth bandwidth mode set.

In a possible manner, the third bandwidth mode set may include one or more of the four bandwidth modes: 20 MHz, 40 MHz, 80 MHz, and 160 MHz (or 80+80 MHz), and/or the fourth bandwidth mode set may include one or more of the four bandwidth modes: 20 MHz, 40 MHz, 80 MHz, and 160 MHz (or 80+80 MHz).

In another possible design, the third bandwidth mode set does not include the four bandwidth modes: 20 MHz, 40 MHz, 80 MHz, and 160 MHz (or 80+80 MHz), and the fourth bandwidth mode set does not include the four bandwidth modes: 20 MHz, 40 MHz, 80 MHz, and 160 MHz (or 80+80 MHz).

Optionally, based on any one of the foregoing design 1 to design 3, when a value of the first field is the second preset value, the bandwidth mode indication field carried in the first frame may use any one of the following implementations 1-1 to 1-4.

Implementation 1-1: The bandwidth mode indication field is implemented by using one or two bits in the first seven bits of the scrambling sequence.

For example, the bandwidth mode indication field may be implemented by using the B5 bit and the B6 bit in the first seven bits of the scrambling sequence.

Implementation 1-2: The bandwidth mode indication field is implemented by using at least three bits in the first seven bits of the scrambling sequence.

For example, the bandwidth mode indication field may be implemented by using a B3 bit, the B5 bit, and the B6 bit in the first seven bits of the scrambling sequence.

Implementations 1-3: The bandwidth mode indication field is implemented by using one or more bits in the last nine bits of the service field.

For example, the bandwidth mode indication field occupies six bits B9 to B14 of the service field.

Implementation 1-4: The bandwidth mode indication field is implemented by using at least one bit in the first seven bits of the scrambling sequence and at least one bit in the last nine bits of the service field.

For example, the bandwidth mode indication field occupies the two bits B5 to B6 in the scrambling sequence and four bits B11 to B14 in the service field.

For example, the bandwidth mode indication field occupies the three bits B3, B5, and B6 in the scrambling sequence and the three bits B12 to B14 in the service field.

Optionally, the second bandwidth mode set, the third bandwidth mode set, or the fourth bandwidth mode set may include a preamble puncturing bandwidth mode and/or a non-preamble puncturing bandwidth mode. The non-preamble puncturing bandwidth mode may also be referred to as a preamble non-puncturing bandwidth mode.

For example, for the preamble puncturing bandwidth mode and the non-preamble puncturing bandwidth mode that are defined by the 802.11be based on non-orthogonal frequency division multiple access (non-orthogonal frequency division multiple access, non-OFDMA), refer to Table 3. Table 3 shows 63 bandwidth modes. In Table 3, one "1" or "X" corresponds to one 20 MHz channel, "1" indicates that the corresponding 20 MHz channel is idle, and "X" indicates that the corresponding 20 MHz channel is busy or not available (no available).

In this embodiment of this application, for a preamble puncturing bandwidth mode, a total bandwidth corresponding to the bandwidth mode is a bandwidth when preamble puncturing is not performed. For example, the total bandwidth may be 20 MHz, 40 MHz, 80 MHz, 160 MHz (or 80+80 MHz), or 320 MHz (or 160+160 MHz).

**Table 3**

| Total bandwidth | Bandwidth mode | Quantity |
|---|---|---|
| 20 MHz | 1 | 1 |
| 40 MHz | 11 | 1 |
| 80 MHz | 1111 | 5 |
| | x111 | |
| | 1x11 | |
| | 11x1 | |
| | 111x | |
| 160 MHz | 11111111 | 13 |
| | x111 1111 | |
| | 1x11 1111 | |
| | 11x1 1111 | |
| | 111x 1111 | |
| | 1111 x111 | |
| | 1111 1x11 | |
| | 1111 11x1 | |
| | 1111 111x | |
| | xx11 1111 | |
| | 11xx 1111 | |
| | 1111 xx11 | |
| | 1111 11xx | |
| 320 MHz | 1111 1111 1111 1111 | 43 |
| | xx11 1111 11111111 | |
| | 11xx 1111 1111 1111 | |
| | 1111 xx11 1111 1111 | |
| | 1111 11xx 1111 1111 | |
| | 1111 1111 xx11 1111 | |
| | 1111 1111 11xx 1111 | |
| | 1111 1111 1111 xx11 | |
| | 1111 1111 1111 11xx | |
| | xxxx 1111 1111 1111 | |
| | 1111 xxxx 1111 1111 | |
| | 1111 1111 xxxx 1111 | |
| | 1111 1111 1111 xxxx | |
| | xxxx xx11 1111 1111 | |
| | xxxx 11xx 1111 1111 | |
| | xxxx 1111 xx11 1111 | |
| | xxxx 1111 11xx 1111 | |
| | xxxx 1111 1111 xx11 | |
| | xxxx 1111 1111 11xx | |
| | xx11 xxxx 1111 1111 | |
| | 11xx xxxx 1111 1111 | |
| | 1111 xxxx xx11 1111 | |
| | 1111 xxxx 11xx 1111 | |
| | 1111 xxxx 1111 xx11 | |
| | 1111 xxxx 1111 11xx | |
| | xx11 1111 xxxx 1111 | |
| | 11xx 1111 xxxx 1111 | |
| | 1111 xx11 xxxx 1111 | |
| | 1111 11xx xxxx 1111 | |
| | 1111 1111 xxxx xx11 | |
| | 1111 1111 xxxx 11xx | |
| | xx11 1111 1111 xxxx | |
| | 11xx 1111 1111 xxxx | |
| | 1111 xx11 1111 xxxx | |
| | 1111 11xx 1111 xxxx | |
| | 1111 1111 xx11 xxxx | |
| | 1111 1111 11xx xxxx | |
| | xxxx xxxx 1111 1111 | |
| | xxxx 1111 xxxx 1111 | |
| | xxxx 1111 1111 xxxx | |
| | 1111 xxxx xxxx 1111 | |
| | 1111 xxxx 1111 xxxx | |
| | 1111 1111 xxxx xxxx | |

Design 4: The first field occupies one bit, and the first frame indicates the bandwidth mode in the following manner (4-1) or (4-2).

(4-1): When the first field is set to the first preset value, the first frame does not carry the bandwidth mode indication field, or the bandwidth mode indication field carried in the first frame indicates the bandwidth mode in the first bandwidth mode set.

(4-2): When the first field is set to the second preset value, the bandwidth mode indication field carried in the first frame includes a fourth field and a fifth field. The fourth field indicates the total bandwidth. The fifth field indicates preamble puncturing information corresponding to the total bandwidth. In other words, the fifth field indicates availability of each channel corresponding to the total bandwidth.

The fourth field may occupy at least one bit, and the fifth field occupies at least one bit. The fourth field and the fifth field are located in the service field.

Optionally, the fourth field may use any one of the following implementations 2-1 to 2-3.

Implementation 2-1: The fourth field occupies one bit. The fourth field indicates the total bandwidth, and includes the following case 1-1 and/or case 1-2.

Case 1-1: When a value of the fourth field is an eleventh preset value, it indicates that the total bandwidth is less than or equal to 160 MHz.

Case 1-2: When the value of the fourth field is a twelfth preset value, it indicates that the total bandwidth is greater than 160 MHz, or the total bandwidth is equal to 320 MHz or 160+160 MHz.

Implementation 2-2: The fourth field occupies two bits. The fourth field indicates the total bandwidth, and includes one or more of the following cases 2-1 to 2-3.

Case 2-1: When the value of the fourth field is the eleventh preset value, it indicates that the total bandwidth is equal to 80 MHz.

Case 2-2: When the value of the fourth field is the twelfth preset value, it indicates that the total bandwidth is equal to 160 MHz or 80+80 MHz.

Case 2-3: When the value of the fourth field is a thirteenth preset value, it indicates that the total bandwidth is equal to 320 MHz or 160+160 MHz.

For example, the eleventh preset value, the twelfth preset value, and the thirteenth preset value are 0, 1, and 2.

Implementation 2-3: The fourth field occupies three bits. The fourth field indicates the total bandwidth, and includes one or more of the following cases 3-1 to 3-5.

Case 3-1: When the value of the fourth field is the eleventh preset value, it indicates that the total bandwidth is equal to 20 MHz.

Case 3-2: When the value of the fourth field is the twelfth preset value, it indicates that the total bandwidth is equal to 40 MHz.

Case 3-3: When the value of the fourth field is the thirteenth preset value, it indicates that the total bandwidth is equal to 80 MHz.

Case 3-4: When the value of the fourth field is a fourteenth preset value, it indicates that the total bandwidth is equal to 160 MHz or 80+80 MHz.

Case 3-5: When the value of the fourth field is a fifteenth preset value, it indicates that the total bandwidth is equal to 320 MHz or 160+160 MHz.

For example, the eleventh preset value to the fifteenth preset value are sequentially 0, 1, 2, 3, and 4.

Optionally, the fifth field may use any one of the following implementations 3-1 to 3-4.

Implementation 3-1: The fifth field occupies eight bits. The fifth field indicates the preamble puncturing information corresponding to the total bandwidth, and includes the following case 4-1 or case 4-2.

Case 4-1: When the total bandwidth indicated by the fourth field is less than or equal to 160 MHz, each bit in the fifth field corresponds to one 20 MHz channel. One bit indicates whether the 20 MHz channel corresponding to the bit is idle.

Optionally, channels corresponding to bits in the fifth field are sequentially set in an order from a low frequency to a high frequency. In this way, in the fifth field, a least significant bit corresponds to a low-frequency channel, and a most significant bit corresponds to a high-frequency channel.

Optionally, the channels corresponding to the bits in the fifth field are sequentially set in an order from a high frequency to a low frequency. In this way, in the fifth field, a least significant bit corresponds to a high-frequency channel, and a most significant bit corresponds to a low-frequency channel.

The foregoing correspondences between the bits and the channels are not only applicable to case 4-1 of the fifth field, but also applicable to another case of the fifth field or another field.

That one bit indicates whether a channel corresponding to the bit is idle may be as follows: When the bit is set to a seventh preset value, it indicates that the channel corresponding to the bit is available; or when the bit is set to an eighth preset value, it indicates that the channel corresponding to the bit is not available or busy. Optionally, the seventh preset value is 0, and the eighth preset value is 1. Alternatively, the seventh preset value is 1, and the eighth preset value is 0. This is uniformly described herein, and details are not described below again.

In this embodiment of this application, "a channel is not available or busy" may be replaced with "a channel is punctured", and "a channel is idle" may be replaced with "a channel is not punctured".

Case 4-2: When the total bandwidth indicated by the fourth field is greater than 160 MHz, each bit in the fifth field corresponds to one 40 MHz channel. A first bit indicates whether a secondary 20 MHz channel of a primary 40 MHz channel is idle, and the first bit corresponds to the primary 40 MHz channel. A second bit indicates whether a 40 MHz channel corresponding to the second bit is idle. The second bit is any one of bits other than the first bit in the fifth field.

Implementation 3-2: The fifth field occupies eight bits. The fifth field indicates the preamble puncturing information corresponding to the total bandwidth, and includes the following case 5-1 or case 5-2.

Case 5-1: When the total bandwidth indicated by the fourth field is less than or equal to 160 MHz, each bit in the fifth field corresponds to one 20 MHz channel. One bit indicates whether the 20 MHz channel corresponding to the bit is idle.

Case 5-2: The fifth field includes four first bits, two second bits, and two third bits. Each of the four first bits corresponds to one 20 MHz channel of a primary 80 MHz channel, each of the two second bits corresponds to one 40 MHz channel of a secondary 80 MHz channel, and each of the two third bits corresponds to one 80 MHz channel of a secondary 160 MHz channel. The first bit indicates whether the 20 MHz channel corresponding to the first bit is idle. The second bit indicates whether the 40 MHz channel corresponding to the second bit is idle. The third bit indicates whether the 80 MHz channel corresponding to the third bit is idle.

Implementation 3-3: The fifth field occupies 10 bits. The fifth field indicates the preamble puncturing information corresponding to the total bandwidth, and includes the following case 6-1 or case 6-2.

Case 6-1: When the total bandwidth indicated by the fourth field is less than or equal to 160 MHz, each of the eight bits in the fifth field corresponds to one 20 MHz channel. One bit indicates whether the 20 MHz channel corresponding to the bit is idle.

Case 6-2: When the total bandwidth indicated by the fourth field is greater than 160 MHz, the fifth field includes four first bits, two second bits, and four third bits. Each of the four first bits corresponds to one 20 MHz channel of the primary 80 MHz channel. Each of the two second bits corresponds to one 40 MHz channel of the secondary 80 MHz channel. Each of the four third bits corresponds to one 40 MHz channel of the secondary 160 MHz channel. The first bit indicates whether the 20 MHz channel corresponding to the first bit is idle. The second bit indicates whether the 40 MHz channel corresponding to the second bit is idle. The third bit indicates whether the 40 MHz channel corresponding to the third bit is idle.

Implementation 3-4: The fifth field occupies 10 bits. The fifth field indicates the preamble puncturing information corresponding to the total bandwidth, and includes the following case 7-1 or case 7-2.

Case 7-1: When the total bandwidth indicated by the fourth field is less than or equal to 160 MHz, each of the eight bits in the fifth field corresponds to one 20 MHz channel. One bit indicates whether the 20 MHz channel corresponding to the bit is idle.

Case 7-2: When the total bandwidth indicated by the fourth field is greater than 160 MHz, the fifth field includes eight first bits and two second bits. Each of the eight first bits corresponds to one 20 MHz channel of the primary 160 MHz channel. Each of the two second bits corresponds to one 80 MHz channel of the secondary 160 MHz channel. The first bit indicates whether the 20 MHz channel corresponding to the first bit is idle. The second bit indicates whether the 160 MHz channel corresponding to the second bit is idle.

Design 5: The first field occupies two bits, and the first frame indicates the bandwidth mode in the following manners (5-1), (5-2), or (5-3).

(5-1): When the first field is set to the first preset value, the first frame does not carry the bandwidth mode indication field, or the bandwidth mode indication field carried in the first frame indicates the bandwidth mode in the first bandwidth mode set.

(5-2): When the first field is set to the second preset value, the first field indicates that the total bandwidth is less than or equal to 160 MHz, and the bandwidth mode indication field indicates whether each channel is idle when the total bandwidth is less than or equal to 160 MHz.

(5-3): When the first field is set to a third preset value, the first field indicates that the total bandwidth is greater than 160 MHz (or the total bandwidth is equal to 320 MHz), and the bandwidth mode indication field indicates whether each channel is idle when the total bandwidth is greater than 160 MHz.

Design 6: The first field occupies two bits, and the first frame indicates the bandwidth mode in the following manners (6-1), (6-2), (6-3), or (6-4).

(6-1): When the first field is set to the first preset value, the first frame does not carry the bandwidth mode indication field, or the bandwidth mode indication field carried in the first frame indicates the bandwidth mode in the first bandwidth mode set.

(6-2): When the first field is set to the second preset value, the first field indicates that the total bandwidth is equal to 80 MHz, and the bandwidth mode indication field indicates whether each channel is idle when the total bandwidth is equal to 80 MHz.

(6-3): When the first field is set to the third preset value, the first field indicates that the total bandwidth is equal to 160 MHz, and the bandwidth mode indication field indicates whether each channel is idle when the total bandwidth is equal to 160 MHz.

(6-4): When the first field is set to a fourth preset value, the first field indicates that the total bandwidth is equal to 320 MHz, and the bandwidth mode indication field indicates whether each channel is idle when the total bandwidth is equal to 320 MHz.

Design 7: The first field occupies three bits, and the first frame indicates the bandwidth mode in the following manners (7-1), (7-2), (7-3), (7-4), or (7-5).

(7-1): When the first field is set to the first preset value, the first frame does not carry the bandwidth mode indication field, or the bandwidth mode indication field carried in the first frame indicates the bandwidth mode in the first bandwidth mode set.

(7-2): When the first field is set to the second preset value, the first field indicates that the total bandwidth is equal to 20 MHz, and the bandwidth mode indication field indicates whether each channel is idle when the total bandwidth is equal to 20 MHz.

(7-3): When the first field is set to the third preset value, the first field indicates that the total bandwidth is equal to 40 MHz, and the bandwidth mode indication field indicates whether each channel is idle when the total bandwidth is equal to 40 MHz.

(7-4): When the first field is set to the fourth preset value, the first field indicates that the total bandwidth is equal to 80 MHz, and the bandwidth mode indication field indicates whether each channel is idle when the total bandwidth is equal to 80 MHz.

(7-5): When the first field is set to a fifth preset value, the first field indicates that the total bandwidth is equal to 160 MHz, and the bandwidth mode indication field indicates whether each channel is idle when the total bandwidth is equal to 160 MHz.

(7-6): When the first field is set to a sixth preset value, the first field indicates that the total bandwidth is equal to 320 MHz, and the bandwidth mode indication field indicates whether each channel is idle when the total bandwidth is equal to 320 MHz.

Optionally, based on any one of the design 5 to the design 7, when the total bandwidth indicated by the first field is less than or equal to 160 MHz, the bandwidth mode indication field includes any one of the following implementation 4-1 or implementation 4-2.

Implementation 4-1: The bandwidth mode indication field occupies eight bits, and each bit in the bandwidth mode indication field corresponds to one 20 MHz channel. One bit indicates whether the 20 MHz channel corresponding to the bit is idle.

Implementation 4-2: The bandwidth mode indication field occupies 10 bits, and each of the eight fields in the bandwidth mode indication field corresponds to one 20 MHz channel. One bit indicates whether the 20 MHz channel corresponding to the bit is idle.

Optionally, based on any one of the design 5 to the design 7, when the total bandwidth indicated by the first field is greater than 160 MHz, or the total bandwidth indicated by the first field is equal to 320 MHz, the bandwidth mode indication field includes any one of the following implementations 5-1 to 5-4.

Implementation 5-1: The bandwidth mode indication field occupies eight bits, and each bit in the bandwidth mode indication field corresponds to one 40 MHz channel. The first bit indicates whether the secondary 20 MHz channel of the primary 40 MHz channel is idle, and the first bit corresponds to the primary 40 MHz channel. The second bit indicates whether the 40 MHz channel corresponding to the second bit is idle. The second bit is any one of bits other than the first bit in the bandwidth mode indication field.

Implementation 5-2: The bandwidth mode indication field occupies eight bits, the bandwidth mode indication field includes four first bits, two second bits, and two third bits, each of the four first bits corresponds to one 20 MHz channel of the primary 80 MHz channel, each of the two second bits corresponds to one 40 MHz channel of the secondary 80 MHz channel, and each of the two third bits corresponds to one 80 MHz of the secondary 160 MHz channel. The first bit indicates whether the 20 MHz channel corresponding to the first bit is idle. The second bit indicates whether the 40 MHz channel corresponding to the second bit is idle. The third bit indicates whether the 80 MHz channel corresponding to the third bit is idle.

Implementation 5-3: The bandwidth mode indication field occupies 10 bits, and the bandwidth mode indication field includes four first bits, two second bits, and four third bits. Each of the four first bits corresponds to one 20 MHz channel of the primary 80 MHz channel. Each of the two second bits corresponds to one 40 MHz channel of the secondary 80 MHz channel. Each of the four third bits corresponds to one 40 MHz channel of the secondary 160 MHz channel. The first bit indicates whether the 20 MHz channel corresponding to the first bit is idle. The second bit indicates whether the 40 MHz channel corresponding to the second bit is idle. The third bit indicates whether the 40 MHz channel corresponding to the third bit is idle.

Implementation 5-4: The bandwidth mode indication field occupies 10 bits, and the bandwidth mode indication field includes eight first bits and two second bits. Each of the eight first bits corresponds to one 20 MHz channel of the primary 160 MHz channel. Each of the two second bits corresponds to one 80 MHz channel of the secondary 160 MHz channel. The first bit indicates whether the 20 MHz channel corresponding to the first bit is idle. The second bit indicates whether the 160 MHz channel corresponding to the second bit is idle.

Based on the foregoing first frame, as shown in FIG. 3, an embodiment of this application provides a bandwidth mode indication method. The method includes the following steps.

S101: The transmit end generates the first frame.

The transmit end supports the 802.11be standard, or supports the next-generation 802.11 standard of the 802.11be standard. It may be understood that the transmit end may be backward compatible with a previous standard protocol, for example, support the 802.11ax standard and the 802.11ax standard before the 802.11ax standard. The transmit end may be an AP, or may be a STA.

The transmit end may determine a value of a related field (for example, the first field) in the first frame based on factors such as a requirement of the transmit end and a protocol supported by a peer device (namely, a receive end in the following).

For example, when the receive end supports the 802.11be standard, the transmit end may set the value of the first field in the first frame to the first preset value or the second preset value. When the receive end does not support the 802.11be standard, the transmit end can only set the value of the first field in the first frame to the first preset value. S102: The transmit end sends the first frame to the receive end, so that the receive end receives the first frame. S103: The receive end parses the first frame.

In this embodiment of this application, when the receive end learns, through parsing, that the value of the first field in the first frame is the second preset value, the receive end may determine that the transmit end of the first frame (namely, the transmit end) supports the 802.11be standard or the next-generation 802.11 standard.

Based on the technical solution shown in FIG. 3, the first frame uses only at least one bit in the service field as the first field, and does not increase or decrease a bit in the service field. In this way, backward compatibility of the first frame is ensured. The first field indicates whether the bandwidth mode indication field carried in the first frame is allowed to indicate the target bandwidth mode. In other words, because the service field of the first frame includes the first field, the bandwidth mode indication field carried in the first frame extends a range of bandwidth modes that can be indicated. Therefore, in a scenario in which other bandwidth modes other than 20 MHz, 40 MHz, 80 MHz, and 80+80 MHz or 160 MHz are introduced, two devices can negotiate, by transmitting the first frame, to use one bandwidth mode from more bandwidth modes.

In this embodiment of this application, that the first field is located in the service field of the first frame has the following advantages: (1) Currently, a reserved bit in a MAC frame may be used by a chip vendor as a private indication bit. Therefore, if the reserved bit in the MAC frame is used as the first field, indication of the private bit is affected. However, using the bit in the service field as the first field can avoid affecting private use of the reserved bit in the MAC frame by the chip vendor. (2) Reserved bits in MAC frames of different types of conventional frames do not necessarily have the same location. Therefore, for the different types of transmission frames, implementation solutions of using the reserved bits in the MAC frames as the first field are different. The service field is a field introduced to perform a scrambling operation at a physical layer. The service field is located before the MAC frame, and the service field itself is a field at the physical layer, in other words, all types of conventional frames include the service field. In this way, using the bit in the service field as the first field is applicable to all types of conventional frames.

An embodiment of this application provides a second frame. The second frame is a non-HT duplicated frame or a non-HT frame, for example, an RTS frame or a CTS frame.

The second frame includes a service field. The service field carried in the second frame occupies 16 bits. In other words, compared with the non-HT duplicated frame or the non-HT frame defined in the 802.11n standard, no bit is added to or removed from the second frame provided in this application, so that the second frame has backward compatibility.

The service field of the second frame includes a second field, the second field indicates whether a bandwidth mode of the second frame is a target bandwidth mode, and the target bandwidth mode includes one or more of bandwidth modes other than 20 MHz, 40 MHz, 80 MHz, and 80+80 MHz or 160 MHz.

Optionally, the target bandwidth mode includes a preamble puncturing bandwidth mode and/or a non-preamble puncturing bandwidth mode.

Optionally, the second field occupies at least one bit in B7 to B15 bits in the service field. For example, the second field occupies the B7 bit, a B11 bit, or the B15 bit in the service field.

In this embodiment of this application, that the second field indicates whether a bandwidth mode of the second frame is a target bandwidth mode includes the following case (8-1) or case (8-2).

(8-1): When the second field is set to a ninth preset value, the second field indicates that the bandwidth mode of the second frame is not the target bandwidth mode.

Based on the case (8-1), the first frame does not carry the bandwidth mode indication field, or the bandwidth mode indication field carried in the first frame indicates the bandwidth mode in the first bandwidth mode set. In this case, the bandwidth mode indication field carried in the first frame is implemented by using two bits (for example, the B5 bit and the B6 bit) in the first seven bits of the scrambling sequence. Bandwidth modes included in the first bandwidth mode set are 20 MHz, 40 MHz, 80 MHz, and 80+80 MHz or 160 MHz. For the correspondences between the values of the bandwidth mode indication field and the enumerated values of the bandwidth modes, refer to Table 2. This is uniformly described herein, and details are not described below again.

(8-2): When the second field is set to a tenth preset value, the second field indicates that the bandwidth mode of the second frame is the target bandwidth mode.

Optionally, the second frame further includes a unicast/multicast bit, and the case (8-2) may be further classified into the following case (8-2-1) or case (8-2-2).

(8-2-1): When the second field is set to the tenth preset value and the unicast/multicast bit is set to 0, the second field indicates that the bandwidth mode of the second frame is a first bandwidth mode.

(8-2-2): When the second field is set to the tenth preset value and the unicast/multicast bit is set to 1, the second field indicates that the bandwidth mode of the second frame is a second bandwidth mode.

Both the first bandwidth mode and the second bandwidth mode belong to the target bandwidth mode, and the first bandwidth mode is different from the second bandwidth mode. For example, the first bandwidth mode is 240 MHz, and the second bandwidth mode is 320 MHz.

For example, when the second field is implemented by using one bit, the ninth preset value may be 0, and the tenth preset value may be 1; or the tenth preset value may be 1, and the ninth preset value may be 0.

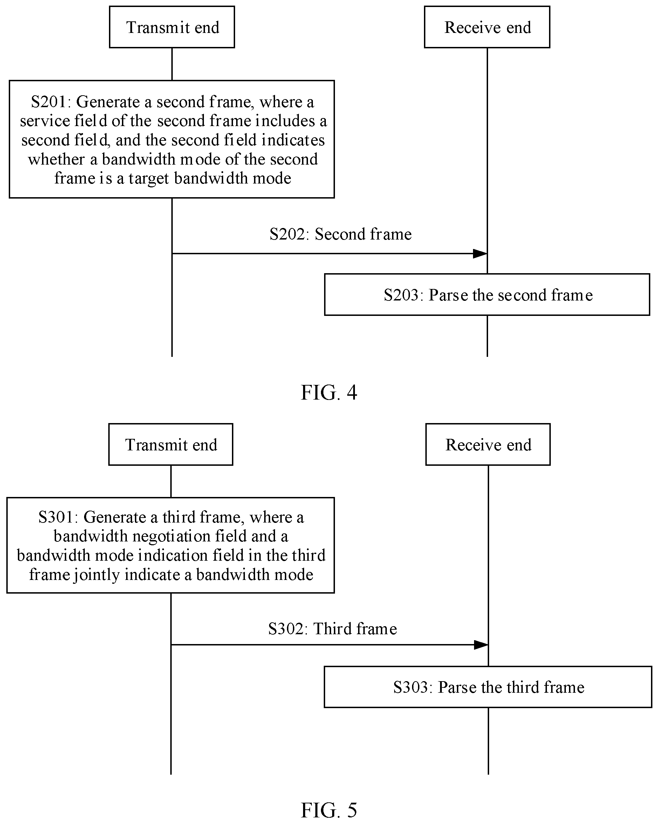

Based on the foregoing second frame, as shown in FIG. 4, an embodiment of this application provides a bandwidth mode indication method. The method includes the following steps.

S201: The transmit end generates the second frame.

The transmit end supports the 802.11be standard, or supports the next-generation 802.11 standard of the 802.11be standard. It may be understood that the transmit end may be backward compatible with the previous standard protocol, for example, support the 802.11ax standard and the 802.11ax standard before the 802.11ax standard. The transmit end may be an AP, or may be a STA.

The transmit end may determine a value of a related field (for example, the second field) in the second frame based on factors such as the requirement of the transmit end and the protocol supported by the receive end.

S202: The transmit end sends the second frame to the receive end, so that the receive end receives the second frame.

S203: The receive end parses the second frame.

Based on the technical solution shown in FIG. 4, the second frame uses only at least one bit in the service field as the second field, and does not increase or decrease a bit in the service field. In this way, backward compatibility of the second frame is ensured. In addition, the second field indicates whether the bandwidth mode of the second frame is the target bandwidth mode. Therefore, in a scenario in which other bandwidth modes other than 20 MHz, 40 MHz, 80 MHz, and 80+80 MHz or 160 MHz are introduced, two devices can negotiate, by transmitting the second frame, to use one bandwidth mode from more bandwidth modes.

For example, the first field or the second field may have another name, for example, an EHT bandwidth indication field. This is not limited in this embodiment of this application.

In this embodiment of this application, that the second field is located in the service field of the second frame has the following advantages: (1) Currently, a reserved bit in a MAC frame may be used by a chip vendor as a private indication bit. Therefore, if the reserved bit in the MAC frame is used as the second field, indication of the private bit is affected. However, using the bit in the service field as the second field can avoid affecting private use of the reserved bit in the MAC frame by the chip vendor. (2) Reserved bits in MAC frames of different types of conventional frames do not necessarily have the same location. Therefore, for the different types of transmission frames, implementation solutions of using the reserved bits in the MAC frames as the second field are different. The service field is a field introduced to perform a scrambling operation at a physical layer. The service field is located before the MAC frame, and the service field itself is a field at the physical layer, in other words, all types of conventional frames include the service field. In this way, using the bit in the service field as the second field is applicable to all types of conventional frames.

Currently, the transmit end sends an RTS frame after backoff is terminated. The transmit end may send the RTS frame in a non-HT duplicated manner. In the RTS frame, a CH_BANDWIDTH_IN_NON_HT field indicates a bandwidth mode, and a DYN_BANDWIDTH_IN_NON_HT field indicates a bandwidth negotiation mode.

The CH_BANDWIDTH_IN_NON_HT field is implemented by using the B5 bit and the B6 bit in the first seven bits of the scrambling sequence. The DYN_BANDWIDTH_IN_NON_HT field is implemented by using the B4 bit in the first seven bits of the scrambling sequence. When the DYN_BANDWIDTH_IN_NON_HT field is set to 0, it indicates static bandwidth negotiation. When the DYN_BANDWIDTH_IN_NON_HT field is set to 1, it indicates dynamic bandwidth negotiation.

After the receive end receives the RTS frame, when the DYN_BANDWIDTH_IN_NON_HT field is set to 0, if an NAV indicates idle, and a bandwidth CCA detection result indicated by the RTS frame is idle, the receive end replies with a non-HT duplicated CTS frame by using a bandwidth indicated by the RTS frame.

After the receive end receives the RTS frame, when the DYN_BANDWIDTH_IN_NON_HT field is set to 1, if the NAV indicates idle, and the bandwidth CCA detection result indicated by the RTS frame is that all or some channels (including the primary 20 MHz channel) are idle, the receiving station replies with the non-HT duplicated CTS frame by using a bandwidth the same as or smaller than that of the RTS frame.

The Applicant finds that when the bandwidth mode indicated by the CH_BANDWIDTH_IN_NON_HT field in the RTS frame is 20 MHz, regardless of whether the DYN_BANDWIDTH_IN_NON_HT field is set to 0 or 1, the receive end uses the same processing manner: When the primary 20 MHz channel is busy, the receive end does not reply with the CTS frame; and when the primary 20 MHz channel is idle, the receive end replies with the CTS frame, and the CH_BANDWIDTH_IN_NON_HT field carried in the CTS frame indicates 20 MHz.

It can be learned that for the RTS frame or the CTS frame defined in the current standard, when the CH_BANDWIDTH_IN_NON_HT field is set to 0, the DYN_BANDWIDTH_IN_NON_HT field has a redundant state.

Based on this, an embodiment of this application provides a third frame. The third frame is a non-HT duplicated frame or a non-HT frame, for example, an RTS frame or a CTS frame.

The third frame includes a bandwidth negotiation field and a bandwidth mode indication field. The bandwidth negotiation field and the bandwidth mode indication field in the third frame jointly indicate a bandwidth mode of the third frame. The bandwidth mode of the third frame is 20 MHz, 40 MHz, 80 MHz, 80+80 MHz or 160 MHz, or a first bandwidth mode. The first bandwidth mode is one of bandwidth modes other than 20 MHz, 40 MHz, 80 MHz, and 80+80 MHz or 160 MHz, for example, 320 MHz.

The bandwidth negotiation field occupies the B4 bit in the first seven bits of the scrambling sequence. The bandwidth mode indication field occupies the B5 bit and the B6 bit in the first seven bits of the scrambling sequence.

Optionally, that the bandwidth negotiation field and the bandwidth mode indication field jointly indicate a bandwidth mode used by the third frame includes the following cases:
(9-1): When the bandwidth negotiation field is set to 1 and the bandwidth mode indication field is set to 0, it indicates that the bandwidth mode used by the third frame is the first bandwidth mode.
(9-2): When the bandwidth negotiation field is set to 0 and the bandwidth mode indication field is set to 0, it indicates that the bandwidth mode used by the third frame is 20 MHz.
(9-3): When the bandwidth negotiation field is set to 0 or 1 and the bandwidth mode indication field is set to 1, it indicates that the bandwidth mode used by the third frame is 40 MHz.
(9-4): When the bandwidth negotiation field is set to 0 or 1 and the bandwidth mode indication field is set to 2, it indicates that the bandwidth mode used by the third frame is 80 MHz.
(9-5): When the bandwidth negotiation field is set to 0 or 1 and the bandwidth mode indication field is set to 3, it indicates that the bandwidth mode used by the third frame is 80+80 MHz or 160 MHz.

In this embodiment of this application, when the bandwidth negotiation field is set to 0, it indicates that static bandwidth negotiation is used. When the bandwidth negotiation field is set to 1, it indicates that dynamic bandwidth negotiation is used.

Based on the foregoing third frame, as shown in FIG. 5, an embodiment of this application provides a bandwidth mode indication method. The method includes the following steps.

S301: The transmit end generates the third frame.

The transmit end supports the 802.11be standard, or supports the next-generation 802.11 standard of the 802.11be standard. It may be understood that the transmit end may be backward compatible with the previous standard protocol, for example, support the 802.11ax standard and the 802.11ax standard before the 802.11ax standard. The transmit end may be an AP, or may be a STA.

The transmit end may determine values of the bandwidth negotiation field and the bandwidth mode indication field in the third frame based on factors such as the requirement of the transmit end and the protocol supported by the receive end.

For example, when the receive end supports the 802.11be standard or the next-generation 802.11 standard, the transmit end may set the bandwidth negotiation field in the third frame to 1, and set the bandwidth mode indication field to 0.

S302: The transmit end sends the third frame to the receive end, so that the receive end receives the third frame.

S303: The receive end parses the third frame.

Based on the technical solution shown in FIG. 5, compared with the conventional technology in which a non-HT frame or a non-HT duplicated frame can negotiate to use one bandwidth mode in four bandwidth modes only by using a bandwidth mode indication field, the third frame provided in this application fully uses a redundant state in the bandwidth negotiation field and the bandwidth mode indication field to indicate a new bandwidth mode (the first bandwidth mode). Therefore, the bandwidth negotiation field and the bandwidth mode indication field in the third frame jointly indicate one of five bandwidth modes. In this way, the third frame is transmitted between two devices, and one of the five bandwidth modes can be used through negotiation. In addition, compared with the non-HT frame or the non-HT duplicated frame defined in the 802.11n standard, no bit is added to or removed from the third frame provided in this application. In this way, backward compatibility of the third frame is ensured.

After the bandwidths supported by the 802.11be standard are extended to 320 MHz, the device can use more bandwidth modes. For the transmit end, an MU-RTS frame sent by the transmit end may use a user information field (user info field) of a special AID to carry the bandwidth mode indication field. In this way, the bandwidth mode indication field may occupy more bits (for example, 16 bits), so that the bandwidth mode indication field is applicable to a scenario in which there are more bandwidth modes in a communication system.

However, for the receive end, the CTS frame used to respond to the MU-RTS frame is a conventional frame, so that the CTS frame does not have sufficient idle bits for use by the bandwidth mode indication field. Therefore, the current CTS frame is not applicable to the scenario in which more bandwidth modes are introduced to the communication system.

To resolve this technical problem, an embodiment of this application provides a fourth frame. The fourth frame is used to respond to the MU-RTS frame or the RTS frame. Compared with a MAC frame that is of the current CTS frame and that occupies 112 bits, a MAC frame of the fourth frame occupies 112+N bits, where N is a positive integer. One or more of the N bits indicates a bandwidth mode. The bandwidth mode may be a preamble puncturing bandwidth mode or a non-preamble puncturing bandwidth mode.

In this way, when the fourth frame includes all fields carried in the CTS frame, the fourth frame may further provide more idle bits to indicate the bandwidth mode, to indicate one bandwidth mode from the at least five bandwidth modes.

In this embodiment of this application, N is less than or equal to 10. A specific reason is as follows:
Currently, the CTS frame is usually sent at a rate of 6 Mbps, and a length of one OFDM symbol is 4 microseconds, so that one OFDM symbol can transmit 24 bits (6 Mbps*4 microseconds) of data. Because one byte has eight bits, one OFDM symbol can transmit three bytes.

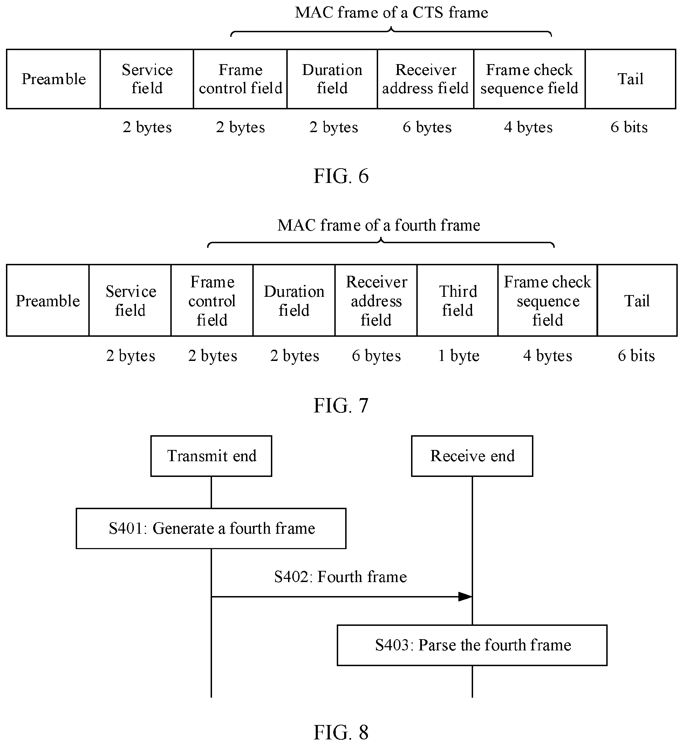

As shown in FIG. 6, in addition to a preamble part that is also included in a non-HT frame, the CTS frame further includes a service field (2 bytes), a frame control (frame control) field (2 bytes), a duration (duration) field (2 bytes), a receiver address (receiver address, RA) field (6 bytes), a frame check sequence (frame check sequence, FCS) field (4 bytes), and a tail (tail) (6 bits). In other words, the CTS frame needs to use 16 bytes+6 bits to carry the foregoing fields. Therefore, the CTS frame needs six OFDM symbols for transmission. It should be noted that, in the foregoing calculation process, a time period required for transmitting a physical frame header part is ignored, because the transmission time period of the physical frame header part is fixed for all non-HT frames.

A NAV reset mechanism based on RTS/CTS or MU-RTS/CTS interaction is supported in the current standard: If a station updates its NAV for the last time based on the RTS frame or MU-RTS frame and does not receive PHY-RXSTART.indication within NAVTimeout, the station may reset the NAV, in other words, ignore an update of the NAV by the RTS or MU-RTS. NAVTimeout is calculated from a time point at which a MAC layer receives a PHY-RXEND.indication primitive of the RTS or MU-RTS frame.

NAVTimeout is a fixed time length defined in the current standard, and is specifically equal to (2×aSIFSTime)+(CTS_Time)+aRxPHYStartDelay+(2×aSlotTime), where aSIFSTime=16 microseconds, CTS_Time is transmission duration of the CTS frame, aRxPHYStartDelay is a physical layer receiving delay, and aSlotTime=9 microseconds.

Because NAVTimeout is the fixed time length, to ensure normal execution of the NAV reset mechanism based on the RTS/CTS or MU-RTS/CTS interaction, transmission duration of the fourth frame should be consistent with transmission duration of the CTS frame. In other words, the fourth frame also needs six OFDM symbols for transmission. The six OFDM symbols can transmit a maximum of 18 bytes of data. Therefore, compared with the CTS frame, a maximum of 10 bits may be added to the fourth frame. In other words, N is less than or equal to 10.

Optionally, N may be equal to 8. In this way, the fourth frame may meet a rule of increasing a length of the MAC frame by an integer byte.

The following specifically describes the fourth frame by using an example in which N=8.

The MAC frame of the fourth frame occupies 15 bytes. As shown in FIG. 7, a MAC frame of the fourth frame includes a frame control field, a duration field, a transmitter address field, a frame check sequence field, and a third field. The frame control field occupies two bytes, the duration field occupies two bytes, the transmitter address field occupies six bytes, the frame check sequence field occupies four bytes, and the third field occupies one byte.

A location of the third field in the fourth frame is not limited in this embodiment of this application. For example, the third field may also be located between the transmitter address field and the duration field.

In this embodiment of this application, K bits in the third field indicates a bandwidth mode of the fourth frame.

Optionally, the fourth frame further includes a service field, and the service field occupies 16 bits. The K bits in the third field and M bits in the service field jointly indicate the bandwidth mode of the fourth frame, where M is a positive integer.

For example, when K+M=16, that the K bits in the third field and the M bits in the service field jointly indicate the bandwidth mode of the fourth frame includes: Each of the 16 bits corresponds to one 20 MHz channel, and a value of one bit indicates whether the 20 MHz channel corresponding to the bit is idle. The foregoing 16 bits include the K bits in the third field and the M bits in the service field.

For example, the 16 bits may include eight bits in the third field and eight bits in the service field. The eight bits in the service field may be any eight of the last nine bits (namely, the B7 bit to the B15 bit) of the service field.

Optionally, when the M bits in the service field include a B0 bit to a B6 bit in the service field, it needs to be ensured that not all of the B0 bit to the B6 bit are set to 0, to avoid that a scrambling process cannot work normally.

Based on the foregoing third frame, this application provides a bandwidth mode indication method. As shown in FIG. 8, the method includes the following steps.

S401: The transmit end generates the fourth frame.

For specific descriptions of the fourth frame, refer to the foregoing descriptions. Details are not described herein again.

In a possible implementation, when the transmit end determines that the receive end supports the 802.11be standard or the next-generation 802.11 standard, the transmit end generates the fourth frame.

S402: The transmit end sends the fourth frame, so that the receive end receives the fourth frame.

S403: The receive end parses the fourth frame.

Based on the technical solution shown in FIG. 8, compared with the existing CTS frame, the fourth frame has more idle bits that indicate bandwidth modes. In this way, in a scenario in which other bandwidth modes other than 20 MHz, 40 MHz, 80 MHz, and 80+80 MHz or 160 MHz are introduced, the transmit end sends the third frame to the receive end, to use one bandwidth mode from more bandwidth modes.

The following mainly describes the solutions provided in embodiments of this application from a perspective of a communication apparatus. It may be understood that, to implement the foregoing functions, the communication apparatus includes corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method examples. For example, each functional module may be obtained through division based on a corresponding function, or two or more functions may be integrated into one functional module. The integrated module may be implemented in a form of hardware, or may be implemented in a form of a software functional module. In this embodiment of this application, module division is an example, and is merely a logical function division. In actual implementation, another division manner may be used. An example in which each function module is obtained through division based on each corresponding function is used below for description.

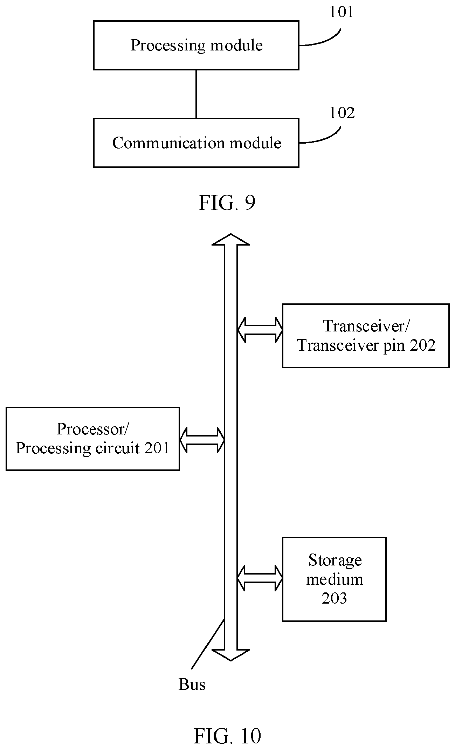

FIG. 9 shows a communication apparatus according to an embodiment of this application. The communication apparatus includes a processing module 101 and a communication module 102.

In a possible manner, when the communication apparatus serves as a transmit end, the processing module 101 is configured to perform step S101 in FIG. 3, and the communication module is configured to perform step S102 in FIG. 3.

In another possible design, when the communication apparatus serves as the transmit end, the processing module 101 is configured to perform step S201 in FIG. 4, and the communication module 102 is configured to perform step S202 in FIG. 4.

In another possible design, when the communication apparatus serves as the transmit end, the processing module 101 is configured to perform step S301 in FIG. 5, and the communication module 102 is configured to perform step S302 in FIG. 5.

In another possible design, when the communication apparatus serves as the transmit end, the processing module 101 is configured to perform step S401 in FIG. 8, and the communication module 102 is configured to perform step S402 in FIG. 8.

In another possible design, when the communication apparatus serves as a receive end, the processing module 101 is configured to perform step S103 in FIG. 3, and the communication module 102 is configured to perform step S102 in FIG. 3.

In another possible design, when the communication apparatus serves as the receive end, the processing module 101 is configured to perform step S203 in FIG. 4, and the communication module 102 is configured to perform step S202 in FIG. 4.

In another possible design, when the communication apparatus serves as the receive end, the processing module 101 is configured to perform step S303 in FIG. 5, and the communication module 102 is configured to perform step S302 in FIG. 5.

In another possible design, when the communication apparatus serves as the receive end, the processing module 101 is configured to perform step S403 in FIG. 8, and the communication module 102 is configured to perform step S402 in FIG. 8.

FIG. 10 is a diagram of a structure of a possible product form of a communication apparatus according to an embodiment of this application.

In a possible product form, the communication apparatus in this embodiment of this application may be a communication device, and the communication device includes a processor 201 and a transceiver 202. Optionally, the communication device further includes a storage medium 203.

In a possible manner, when the communication device is used as a transmit end, the processor 201 is configured to perform step S101 in FIG. 3, and the transceiver 202 is configured to perform step S102 in FIG. 3.

In another possible design, when the communication device is used as the transmit end, the processor 201 is configured to perform step S201 in FIG. 4, and the transceiver 202 is configured to perform step S202 in FIG. 4.

In another possible design, when the communication device is used as the transmit end, the processor 201 is configured to perform step S301 in FIG. 5, and the transceiver 202 is configured to perform step S302 in FIG. 5.

In another possible design, when the communication device is used as the transmit end, the processor 201 is configured to perform step S401 in FIG. 8, and the transceiver 202 is configured to perform step S402 in FIG. 8.

In another possible design, when the communication device is used as a receive end, the processor 201 is configured to perform step S103 in FIG. 3, and the transceiver 202 is configured to perform step S102 in FIG. 3.

In another possible design, when the communication device is used as the receive end, the processor 201 is configured to perform step S203 in FIG. 4, and the transceiver 202 is configured to perform step S202 in FIG. 4.

In another possible design, when the communication device is used as the receive end, the processor 201 is configured to perform step S303 in FIG. 5, and the transceiver 202 is configured to perform step S302 in FIG. 5.

In another possible design, when the communication device is used as the receive end, the processor 201 is configured to perform step S403 in FIG. 8, and the transceiver 202 is configured to perform step S402 in FIG. 8.

It should be understood that the communication apparatus shown in FIG. 9 or FIG. 10 implements any function of the transmit end or the receive end in the solutions provided in embodiments of this application.

As a possible product form, the communication apparatus described in embodiments of this application may be implemented by using a chip. The chip includes a processing circuit 201 and a transceiver pin 202. Optionally, the chip may further include a storage medium 203.

In another possible product form, the communication apparatus described in embodiments of this application may alternatively be implemented by using the following circuit or component: one or more field programmable gate arrays (field programmable gate arrays, FPGA), programmable logic devices (programmable logic devices, PLD), controllers, state machines, gate logic, discrete hardware components, any other appropriate circuits, or any combination of circuits that can perform the functions described in this application.

It should be understood that computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

Based on the foregoing descriptions of the implementations, a person skilled in the art may clearly understand that for the purpose of convenient and brief descriptions, division into the foregoing functional modules is merely used as an example for descriptions. During an actual application, the foregoing functions can be allocated to different functional modules for implementation based on a requirement, in other words, an inner structure of an apparatus is divided into different functional modules to implement all or a part of the functions described above.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application.

Therefore, the protection scope of this application shall be subject to the protection scope of the claims.

## Claims

1. A bandwidth mode indication method, wherein the method comprises:
generating a frame (S101), wherein the frame is a non-high throughput, non-HT, frame or a non-high throughput duplicated, non-HT duplicated, frame, the frame comprises a service field, the service field occupises 16 bits B0-B15, first seven bits B0-B6 of the service field carry a scrambling sequence, and the frame further comprises a unicast/multicast bit;
wherein the unicast/multicast bit indicates whether a bandwidth mode indication field carried in the frame indicates a bandwidth mode; and
when the unicast/multicast bit is set to 1 and a B7 bit of the service field is set to a first preset value, the bandwidth mode indication field carried in the frame indicates a bandwidth mode in a first bandwidth mode set, wherein the first bandwidth mode set comprises 20 MHz, 40 MHz, 80 MHz, and 80+80 MHz or 160 MHz;
when the unicast/multicast bit is set to 1 and the B7 bit of the service field is set to a second preset value, the bandwidth mode indication field carried in the frame indicates a bandwidth mode in a second bandwidth mode set, wherein the second bandwidth mode set comprises a target bandwidth mode, and the target bandwidth mode comprises 320MHz or 160+160MHz;
when the unicast/multicast bit is set to 0, the bandwidth mode indication field is not used to indicate the bandwidth mode; and
the method further comprises sending the frame (S102).

2. A bandwidth mode indication method, wherein the method comprises:
receiving a frame (S102), wherein the frame is a non-high throughput, non-HT, frame or a non-high throughput duplicated, non-HT duplicated, frame, the frame comprises a service field, the service field occupies 16 bits B0-B15, first seven bits B0-B6 of the service field carry a scrambling sequence, and the frame further comprises a unicast/multicast bit;
wherein the unicast/multicast bit indicates whether a bandwidth mode indication field carried in the frame indicates a bandwidth mode;
when the unicast/multicast bit is set to 1 and a B7 bit of the service field is set to a first preset value, a bandwidth mode indication field carried in the frame indicates a bandwidth mode in a first bandwidth mode set, wherein the first bandwidth mode set comprises 20 MHz, 40 MHz, 80 MHz, and 80+80 MHz or 160 MHz;
when the unicast/multicast bit is set to 1 and the B7 bit of the service field is set to a second preset value, the bandwidth mode indication field carried in the frame indicates a bandwidth mode in a second bandwidth mode set, wherein the second bandwidth mode set comprises a target bandwidth mode, and the target bandwidth mode comprises 320MHz or 160+160MHz;
when the unicast/multicast bit is set to 0, the bandwidth mode indication field is not used to indicate the bandwidth mode; and
the method further comprises parsing the frame (S103).

3. The method according to claim 1 or 2, wherein the first preset value is 0 and the second preset value is 1.

4. The method according to any one of claims 1 to 3, wherein the bandwidth mode indication field comprises a B5 bit and a B6 bit of the service field.

5. The method according to any one of claims 1 to 4, wherein the bandwidth mode indication field is CH_BANDWIDTH_IN_NON_HT field.

6. The method according to any one of claims 1 to 5, wherein the target bandwidth mode comprises a preamble puncturing bandwidth mode and/or a non-preamble puncturing bandwidth mode.

7. A communication apparatus, comprising:
a processor; and
a storage medium, configured to store computer instructions, which when executed by the processor, cause the communication apparatus to perform the method in any one of claims 1 and 3 to 6.

8. A communication apparatus, comprising:
a processor; and
a storage medium, configured to store computer instructions, which when executed by the processor, cause the communication apparatus to perform the method in any one of claims 2 to 6.

9. A computer-readable storage medium, wherein the computer-readable storage medium stores computer instructions; and when the computer instructions are run on a computer, the computer is enabled to perform the method according to any one of claims 1 and 3 to 6.

10. A computer-readable storage medium, wherein the computer-readable storage medium stores computer instructions; and when the computer instructions are run on a computer, the computer is enabled to perform the method according to any one of claims 2 to 6.

11. A chip, wherein the chip comprises a processing unit and a transceiver pin, the processing unit is configured to perform a processing operation in the method according to any one of claims 1 and 3 to 8, and the transceiver pin is configured to perform a communication operation in the method according to any one of claims 1 and 3 to 6.

12. A chip, wherein the chip comprises a processing unit and a transceiver pin, the processing unit is configured to perform a processing operation in the method according to any one of claims 2 to 6, and the transceiver pin is configured to perform a communication operation in the method according to any one of claims 2 to 6.

13. A computer program product, wherein when the computer program product runs on a computer, the computer is enabled to perform the method according to any one of claims 1 to 6.

## Patentansprüche

1. Verfahren zur Anzeige eines Bandbreitenmodus, wobei das Verfahren Folgendes umfasst:
Erzeugen eines Frames (S101), wobei der Frame ein Frame mit niedrigem Durchsatz (non-high throughput, non-HT) oder ein duplizierter Frame mit niedrigem Durchsatz (non-HT duplicated) ist, der Frame ein Servicefeld umfasst, das Servicefeld 16 Bits B0-B15 einnimmt, die ersten sieben Bits B0-B6 des Servicefelds eine Verschlüsselungssequenz tragen, und der Frame ferner ein Unicast/Multicast-Bit umfasst;
wobei das Unicast/Multicast-Bit anzeigt, ob ein in dem Frame getragenes Bandbreitenmodus-Anzeigefeld einen Bandbreitenmodus anzeigt; und
wenn das Unicast/Multicast-Bit auf 1 gesetzt wird und ein B7-Bit des Servicefelds auf einen ersten voreingestellten Wert gesetzt wird, das in dem Frame getragene Bandbreitenmodus-Anzeigefeld einen Bandbreitenmodus in einem ersten Bandbreitenmodussatz anzeigt, wobei der erste Bandbreitenmodussatz 20 MHz, 40 MHz, 80 MHz und 80+80 MHz oder 160 MHz umfasst;
wenn das Unicast/Multicast-Bit auf 1 gesetzt wird und das B7-Bit des Servicefelds auf einen zweiten voreingestellten Wert gesetzt wird, das im Frame getragene Bandbreitenmodus-Anzeigefeld einen Bandbreitenmodus in einem zweiten Bandbreitenmodussatz anzeigt, wobei der zweite Bandbreitenmodussatz einen Zielbandbreitenmodus umfasst und der Zielbandbreitenmodus 320 MHz oder 160 + 160 MHz umfasst;
wenn das Unicast/Multicast-Bit auf 0 gesetzt wird, das Bandbreitenmodus-Anzeigefeld nicht verwendet wird, um den Bandbreitenmodus anzuzeigen; und
das Verfahren ferner Senden des Frames (S102) umfasst.

2. Verfahren zur Anzeige eines Bandbreitenmodus, wobei das Verfahren Folgendes umfasst:
Empfangen eines Frames (S102), wobei der Frame ein Frame mit niedrigem Durchsatz oder ein duplizierter Frame mit niedrigem Durchsatz ist, der Frame ein Servicefeld umfasst, das Servicefeld 16 Bits B0-B15 einnimmt, die ersten sieben Bits B0-B6 des Servicefelds eine Verschlüsselungssequenz tragen, und der Frame ferner ein Unicast/Multicast-Bit umfasst;
wobei das Unicast/Multicast-Bit anzeigt, ob ein im Frame mitgeführtes Bandbreitenmodus-Anzeigefeld einen Bandbreitenmodus anzeigt;
wenn das Unicast/Multicast-Bit auf 1 gesetzt wird und ein B7-Bit des Servicefelds auf einen ersten voreingestellten Wert gesetzt wird, ein im Frame getragene Bandbreitenmodus-Anzeigefeld einen Bandbreitenmodus in einem ersten Bandbreitenmodussatz anzeigt, wobei der erste Bandbreitenmodussatz 20 MHz, 40 MHz, 80 MHz und 80+80 MHz oder 160 MHz umfasst;
wenn das Unicast/Multicast-Bit auf 1 gesetzt wird und das B7-Bit des Servicefelds auf einen zweiten voreingestellten Wert gesetzt wird, das im Frame getragene Bandbreitenmodus-Anzeigefeld einen Bandbreitenmodus in einem zweiten Bandbreitenmodussatz anzeigt, wobei der zweite Bandbreitenmodussatz einen Zielbandbreitenmodus umfasst und der Zielbandbreitenmodus 320 MHz oder 160 + 160 MHz umfasst;
wenn das Unicast/Multicast-Bit auf 0 gesetzt wird, das Bandbreitenmodus-Anzeigefeld nicht verwendet wird, um den Bandbreitenmodus anzuzeigen; und
das Verfahren ferner Parsen des Frames (S103) umfasst.

3. Verfahren gemäß Anspruch 1 oder 2, wobei der erste voreingestellte Wert 0 ist und der zweite voreingestellte Wert 1 ist.

4. Verfahren gemäß einem der Ansprüche 1 bis 3, wobei das Bandbreitenmodus-Anzeigefeld ein B5-Bit und ein B6-Bit des Servicefelds umfasst.

5. Verfahren gemäß einem der Ansprüche 1 bis 4, wobei das Bandbreitenmodus-Anzeigefeld das Feld CH_BANDWIDTH_IN_NON_HT ist.

6. Verfahren gemäß einem der Ansprüche 1 bis 5, wobei der Zielbandbreitenmodus einen Präambelpunktierungsbandbreitenmodus und/oder einen Nicht-Präambelpunktierungsbandbreitenmodus umfasst.

7. Kommunikationsvorrichtung, umfassend:
einen Prozessor; und
ein Speichermedium, das zum Speichern von Computeranweisungen konfiguriert ist, die, wenn sie durch den Prozessor ausgeführt werden, die Kommunikationsvorrichtung dazu veranlassen, das Verfahren gemäß einem der Ansprüche 1 und 3 bis 6 durchzuführen.

8. Kommunikationsvorrichtung, umfassend:
einen Prozessor; und
ein Speichermedium, das zum Speichern von Computeranweisungen konfiguriert ist, die, wenn sie durch den Prozessor ausgeführt werden, die Kommunikationsvorrichtung dazu veranlassen, das Verfahren gemäß einem der Ansprüche 2 bis 6 durchzuführen.

9. Computerlesbares Speichermedium, wobei das computerlesbare Speichermedium Anweisungen speichert; und der Computer bei Ausführung der Anweisungen auf einem Computer in die Lage versetzt wird, das Verfahren gemäß einem der Ansprüche 1 und 3 bis 6 durchzuführen.

10. Computerlesbares Speichermedium, wobei das computerlesbare Speichermedium Anweisungen speichert, und wenn die Anweisungen auf einem Computer ausgeführt werden, der Computer in die Lage versetzt wird, das Verfahren gemäß einem der Ansprüche 2 bis 6 durchzuführen.

11. Chip, wobei der Chip eine Verarbeitungseinheit und einen Transceiver-Pin umfasst, die Verarbeitungseinheit dazu konfiguriert ist, einen Verarbeitungsvorgang im Verfahren gemäß einem der Ansprüche 1 und 3 bis 8 durchzuführen, und der Transceiver-Pin dazu konfiguriert ist, einen Kommunikationsvorgang im Verfahren gemäß einem der Ansprüche 1 und 3 bis 6 durchzuführen.

12. Chip, wobei der Chip eine Verarbeitungseinheit und einen Transceiver-Pin umfasst, die Verarbeitungseinheit dazu konfiguriert ist, einen Verarbeitungsvorgang im Verfahren gemäß einem der Ansprüche 2 bis 6 durchzuführen, und der Transceiver-Pin dazu konfiguriert ist, einen Kommunikationsvorgang im Verfahren gemäß einem der Ansprüche 2 bis 6 durchzuführen.

13. Computerprogrammprodukt, wobei, wenn das Computerprogrammprodukt auf einem Computer ausgeführt wird, der Computer in die Lage versetzt wird, das Verfahren gemäß einem der Ansprüche 1 bis 6 durchzuführen.

## Revendications

1. Procédé d'indication de mode de bande passante, dans lequel le procédé comprend :
la génération d'une trame (S101), dans lequel la trame est une trame non haut débit, non HT, ou une trame non haut débit dupliquée, non HT dupliquée, la trame comprend un champ de service, le champ de service occupe 16 bits B0-B15, les sept premiers bits B0-B6 du champ de service transportent une séquence de brouillage, et la trame comprend également un bit de monodiffusion/multidiffusion ;
dans lequel le bit de monodiffusion/multidiffusion indique si un champ d'indication de mode de bande passante transporté dans la trame indique un mode de bande passante ; et
lorsque le bit de monodiffusion/multidiffusion est défini sur 1 et qu'un bit B7 du champ de service est défini sur une première valeur prédéfinie, le champ d'indication de mode de bande passante transporté dans la trame indique un mode de bande passante dans un premier ensemble de modes de bande passante, le premier ensemble de modes de bande passante comprend 20 MHz, 40 MHz, 80 MHz et 80 + 80 MHz ou 160 MHz ;
lorsque le bit de monodiffusion/multidiffusion est défini sur 1 et que le bit B7 du champ de service est défini sur une seconde valeur prédéfinie, le champ d'indication de mode de bande passante transporté dans la trame indique un mode de bande passante dans un second ensemble de modes de bande passante, dans lequel le second ensemble de modes de bande passante comprend un mode de bande passante cible, et le mode de bande passante cible comprend 320 MHz ou 160 + 160 MHz ;
lorsque le bit de monodiffusion/multidiffusion est défini sur 0, le champ d'indication du mode de bande passante n'est pas utilisé pour indiquer le mode de bande passante ; et
le procédé comprend également l'envoi de la trame (S102).

2. Procédé d'indication de mode de bande passante, dans lequel le procédé comprend :
la réception d'une trame (S102), dans lequel la trame est une trame non haut débit, non HT, ou une trame non haut débit dupliquée, non HT dupliquée, la trame comprend un champ de service, le champ de service occupe 16 bits B0-B15, les sept premiers bits B0-B6 du champ de service transportent une séquence de brouillage, et la trame comprend également un bit de monodiffusion/multidiffusion ;
dans lequel le bit de monodiffusion/multidiffusion indique si un champ d'indication de mode de bande passante transporté dans la trame indique un mode de bande passante ;
lorsque le bit de monodiffusion/multidiffusion est défini sur 1 et qu'un bit B7 du champ de service est défini sur une première valeur prédéfinie, un champ d'indication de mode de bande passante transporté dans la trame indique un mode de bande passante dans un premier ensemble de modes de bande passante, dans lequel le premier ensemble de modes de bande passante comprend 20 MHz, 40 MHz, 80 MHz et 80 + 80 MHz ou 160 MHz ;
lorsque le bit de monodiffusion/multidiffusion est défini sur 1 et que le bit B7 du champ de service est défini sur une seconde valeur prédéfinie, le champ d'indication de mode de bande passante transporté dans la trame indique un mode de bande passante dans un second ensemble de modes de bande passante, dans lequel le second ensemble de modes de bande passante comprend un mode de bande passante cible, et le mode de bande passante cible comprend 320 MHz ou 160 + 160 MHz ;
lorsque le bit de monodiffusion/multidiffusion est défini sur 0, le champ d'indication du mode de bande passante n'est pas utilisé pour indiquer le mode de bande passante ; et
le procédé comprend également l'analyse de la trame (S103).

3. Procédé selon la revendication 1 ou 2, dans lequel la première valeur prédéfinie est 0 et la seconde valeur prédéfinie est 1.

4. Procédé selon l'une quelconque des revendications 1 à 3, dans lequel le champ d'indication de mode de bande passante comprend un bit B5 et un bit B6 du champ de service.

5. Procédé selon l'une quelconque des revendications 1 à 4, dans lequel le champ d'indication de mode de bande passante est le champ CH_BANDWIDTH_IN_NON _HT.

6. Procédé selon l'une quelconque des revendications 1 à 5, dans lequel le mode de bande passante cible comprend un mode de bande passante de perforation de préambule et/ou un mode de bande passante de non-perforation de préambule.

7. Appareil de communication, comprenant :
un processeur ; et
un support de stockage, configuré pour stocker des instructions informatiques, qui, lorsqu'elles sont exécutées par le processeur, amènent l'appareil de communication à exécuter le procédé selon l'une quelconque des revendications 1 et 3 à 6.

8. Appareil de communication, comprenant :
un processeur ; et
un support de stockage, configuré pour stocker des instructions informatiques, qui, lorsqu'elles sont exécutées par le processeur, amènent l'appareil de communication à exécuter le procédé selon l'une quelconque des revendications 2 à 6.

9. Support de stockage lisible par ordinateur, dans lequel le support de stockage lisible par ordinateur stocke des instructions informatiques ; et lorsque les instructions informatiques sont exécutées sur un ordinateur, l'ordinateur est activé pour réaliser le procédé selon l'une quelconque des revendications 1 et 3 à 6.

10. Support de stockage lisible par ordinateur, dans lequel le support de stockage lisible par ordinateur stocke des instructions informatiques ; et lorsque les instructions informatiques sont exécutées sur un ordinateur, l'ordinateur est activé pour réaliser le procédé selon l'une quelconque des revendications 2 à 6.

11. Puce, dans laquelle la puce comprend une unité de traitement et une broche d'émetteur-récepteur, l'unité de traitement est configurée pour réaliser une opération de traitement dans le procédé selon l'une quelconque des revendications 1 et 3 à 8, et la broche d'émetteur-récepteur est configurée pour réaliser une opération de communication dans le procédé selon l'une quelconque des revendications 1 et 3 à 6.

12. Puce, dans laquelle la puce comprend une unité de traitement et une broche d'émetteur-récepteur, l'unité de traitement est configurée pour réaliser une opération de traitement dans le procédé selon l'une quelconque des revendications 2 à 6, et la broche d'émetteur-récepteur est configurée pour réaliser une opération de communication dans le procédé selon l'une quelconque des revendications 2 à 6.

13. Produit de programme informatique, dans lequel lorsque le produit de programme informatique est exécuté sur un ordinateur, l'ordinateur est activé pour réaliser le procédé selon l'une quelconque des revendications 1 à 6.
